# EUROPÄISCHE PATENTANMELDUNG

(11) **EP 1 270 304 A2**
(43) Veröffentlichungstag der Anmeldung: **02.01.2003**
(21) Anmeldenummer: 02022197.4
(22) Anmeldetag: 10.07.1998
(51) Int. Cl.: B60K 17/12, H02K 51/00, B60K 17/00

(54) **Elektrische Getriebeeinheit**

(30) Priorität: 10.07.1997 DE 19729378; 17.12.1997 DE 19756083
(62) Teilanmeldung aus: 98941316.6
(71) Anmelder: Voith Turbo GmbH & Co. KG, 89522 Heidenheim (DE)
(72) Erfinder: Martin, Heinz, 89518 Heidenheim (DE); Dietzel, Bernd, 89428 Syrgenstein (DE); Müller, Robert, Dr., 89407 Dillingen (DE)
(74) Vertreter: Dr. Weitzel & Partner

(57) **Zusammenfassung**

Die Erfindung betrifft eine elektrische Getriebeeinheit, umfassend mindestens einen Antriebsmotor und mindestens einen Generator.

Die Erfindung ist dadurch gekennzeichnet, daß die elektrische Getriebeeinheit austauschbar im Chassis eines Kraftfahrzeuges angeordnet ist.

## Beschreibung

Die Erfindung betrifft eine elektrische Getriebeeinheit sowie eine Antriebsanordnung für ein Fahrzeug, insbesondere ein nicht spurgebundenes Fahrzeug mit mindestens einem Verbrennungsmotor, einem Generator und einem Antriebsmotor.

Im besonderen bei Straßenfahrzeugen wird heute die Verwendung von Antrieben, bei denen ein Verbrennungsmotor mit einem Generator zur Stromerzeugung verbunden ist und bei denen der Antrieb durch einen Elektromotor bewerkstelligt wird, der vom vorgenannten Generator gespeist wird, diskutiert. Insbesondere soll hier auf die sogenannten dieselelektrischen Antriebe hingewiesen werden.

Ein derartiger Antrieb ist für ein nicht schienengebundenes Fahrzeug beispielsweise aus dem Europäischen Patent EP 0 527 145 B1 bekannt geworden. Dieses Fahrzeug hat sich insbesondere dadurch ausgezeichnet, dass Verbrennungsmotor und Generator zu einer sogenannten Verbrennungsmotor-Generatorgruppe zusammengefaßt wurden.

Spezielle Antriebskonzepte für Fahrzeuge mit einem Verbrennungsmotor und einem Generator, bei denen als Antriebsmotoren sogenannte Permanent-Magnet-Motoren Verwendung finden, sind aus "Drive systems with permanent magnet synchronous motors, in: Automotive Engineering, Februar 1995, S. 75-81" bekanntgeworden.

Die Verwendung von dieselelektrischen Antrieben insbesondere in Nutzfahrzeugen sind in der Veröffentlichung "Ein elektrischer Einzelradantrieb für City-Busse der Zukunft", B. Wüst, R. Müller, A. Lange in "Der Nahverkehr 6/94, Alba Fachverlag, Düsseldorf, S. 1-7" beschrieben. Der Offenbarungsgehalt sämtlicher vorgenannter Druckschriften wird voll umfänglich in die vorliegende Anmeldung mit aufgenommen.

Bei sämtlichen aus dem zitierten Stand der Technik bekannten Antriebsanordnungen war der Generator in der Nähe des Verbrennungsmotor angeordnet bzw. direkt an diesen angeflanscht. Vom Generator aus mußte eine Vielzahl von Elektroleitungen zur Versorgung der Antriebsmaschinen durch das Fahrzeug gelegt werden. Dies war mit einem erheblichen Fertigungsaufwand verbunden. Ein ganz entscheidender weiterer Nachteil der aus dem Stand der Technik bekannten Konzepte bestand darin, daß ganz erhebliche Umbauarbeiten am Fahrzeugchassis vonnöten waren, um den dieselelektrischen Antrieb anstelle eines konventionellen Antriebes in ein Fahrzeug einbauen zu können.

Aufgabe der Erfindung ist es somit, eine Getriebeeinheit bzw. Antriebsanordnung anzugeben, mit der die obengenannten Nachteile aus dem Stand der Technik vermieden werden können. Insbesondere soll es mit Hilfe der Erfindung möglich werden, ein Fahrzeugchassis, das für einen konventionellen Verbrennungsmotorantrieb Verwendung findet, leicht auf einen dieselelektrischen Antrieb umrüsten zu können. Hierdurch soll erreicht werden, daß auf Kundenwünsche flexibel reagiert werden kann, ohne daß aufwendige Umkonstruktionen am Fahrzeugchassis notwendig sind.

Zur Lösung des obengenannten Problems schlägt die Erfindung vor, mindestens einen Generator und mindestens einen Antriebsmotor zu mindestens einer austauschbaren elektrischen Getriebeeinheit zusammenzufassen, so daß die mindestens eine Getriebeeinheit in einer Antriebsanordnung am Fahrzeugchassis räumlich in der Nähe der anzutreibenden Achse anordenbar und tauschbar ist.

Besonders vorteilhaft ist es, wenn die elektrische Getriebeeinheit äußere Abmessungen aufweist, die denen eines Automatikgetriebes in Bezug auf die Einbaumaße entspricht. Hierdurch wird ermöglicht, daß bei der Fahrzeugbestellung angegeben werden kann, ob ein konventioneller Antrieb oder ein dieselelektrischer Antrieb gewünscht wird. Je nach dem, welche Wahl vorliegt, kann auf einfache Art und Weise das für den konventionellen Antrieb erforderliche Automatikgetriebe durch elektrische Getriebeeinheit, umfassend mindestens einen Generator und einen Antriebsmotor, ersetzt werden. Ein besonders einfacher Austausch von Automatikgetriebe gegen elektrische Getriebeeinheit wird dann erreicht, wenn die Getriebeeinheit Befestigungspunkte aufweist und diese Befestigungspunkte derart angeordnet sind, daß die für das Automatikgetriebe vorgesehenen Befestigungsstellen im Fahrzeuggestell bzw. Fahrzeugchassis für die vormontierte elektrische Getriebeeinheit verwendet werden können.

Zur Versorgung der Antriebsmotoren durch die bzw. den Generator der elektrischen Getriebeeinheit werden eine Reihe von elektrischen bzw. elektronischen Komponenten benötigt. Beispielhaft seien hier Steuerungen, Wechselrichter etc. erwähnt. In einer vorteilhaften Ausführungsform der Erfindung werden diese Komponenten von der Getriebeeinheit mit umfaßt. Eine derartige Anordnung ist besonders raumsparend.

Zur Drehzahlanpassung von Generator und Verbrennungsmotor kann vorgesehen sein, daß im Rahmen ein dem Generator vorgeschaltetes Getriebe untergebracht ist.

Umfaßt die elektrische Getriebeeinheit mehrere Antriebsmotoren, so wirken diese in einer vorteilhaften Ausführungsform über ein Summiergetriebe, das ebenfalls im Trägerrahmen untergebracht sein kann, auf eine gemeinsame Abtriebswelle. Werden genau zwei Antriebsmotoren vorgesehen, so sind diese in einer bevorzugten Ausführungsform derart angeordnet, daß die Antriebswellen der Räder direkt angetrieben werden können.

In einer einfachen Ausführungsart kann vorgesehen sein, daß die Getriebeeinheit nur einen einzigen Antriebsmotor umfaßt. Die Kraftübertragung auf die Räder erfolgt dann beispielsweise über ein dem Antriebsmotor nachgeschaltetes, ebenfalls von der Getriebeeinheit umfaßtes Getriebe.

Bei Platzproblemen kann mit Vorteil für die Getriebeeinheit vorgesehen sein, den oder die Antriebsmotoren und/oder das abtriebsseitige Getriebe gegenüber dem Generator um einen Winkel versetzt anzuordnen. Insbesondere bei Antriebsanordnungen, die mehr als eine elektrische Getriebeeinheit umfassen, ist eine derartige Lösung vorteilhaft.

In einer ersten Ausführungsform der Erfindung ist vorgesehen, daß die austauschbare Getriebeeinheit einen Trägerrahmen aufweist, in dem die einzelnen Aggregate der Getriebeeinheit, wie beispielsweise Generator oder Antriebsmotor, gelagert werden. Die Befestigungspunkte der Getriebeeinheit zur Aufhängung im Fahrzeugchassis können dann am Trägerrahmen selbst angeordnet sein.

In einer alternativen Ausführungsform sind die einzelnen Komponenten selbsttragend miteinander verbunden. Dies ermöglicht eine Gesamtanordnung mit kleineren Abmessungen als bei einer Ausführung mit einem Trägerrahmen.

Neben einem ständigen Antrieb des Generators durch einen Verbrennungsmotor ist auch ein Hybridantrieb denkbar bzw. ein Antrieb, bei dem der elektrische Strom für die Antriebsmotoren aus einem Energiespeicher, beispielsweise einer Batterie, zur Verfügung gestellt wird.

Die Erfindung soll nachfolgend anhand der Figuren beispielhaft beschrieben werden.

Es zeigen:
- Fig. 1: eine Draufsicht auf eine Getriebeeinheit gemäß der Erfindung mit einem Trägerrahmen gemäß einer ersten Ausführungsform der Erfindung;
- Fig. 2: eine Seitenansicht der ersten Ausführungsform der Getriebeeinheit mit Trägerrahmen gemäß Fig. 1;
- Fig. 3: eine Draufsicht auf eine zweite Ausführungsform der Erfindung, wobei die in einem Trägerrahmen gelagerte Getriebeeinheit zwei Fahrmotoren aufweist;
- Fig. 4: eine Draufsicht auf eine weitere Ausführungsform der Erfindung, wobei die Getriebeeinheit in einem Trägerrahmen gelagerte mehrere Fahrmotoren und ein Summiergetriebe umfaßt;
- Fig. 5: eine Draufsicht auf eine Ausführungsform der Erfindung, wobei die in einem Trägerrahmen gelagerte Getriebeeinheit einen Fahrmotor und ein nachgeordnetes Getriebe umfaßt;
- Fig. 6: eine Draufsicht auf eine weitere Ausführungsform der Erfindung, wobei die in einem Trägerrahmen gelagerte Getriebeeinheit einen Generator und einen um 90° hierzu versetzten Fahrmotor umfaßt;
- Fig. 7: eine selbsttragende Getriebeeinheit umfassend einen Antriebsmotor und einen Generator;
- Fig. 8: eine selbsttragende Getriebeeinheit umfassend zwei Fahrmotoren;
- Fig. 9: eine selbsttragende Getriebeeinheit umfassend mehrere Fahrmotoren und ein Summiergetriebe;
- Fig. 10: eine selbsttragende Getriebeeinheit umfassend ein Fahrmotor und ein nachgeordnetes Getriebe;
- Fig. 11: eine selbsttragende Getriebeeinheit umfassend einen Generator und einen um 90° hierzu versetzten Fahrmotor.

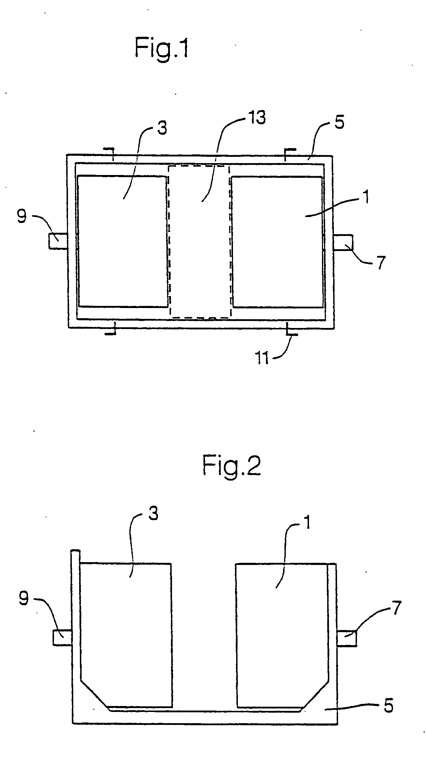

Figur 1 zeigt in einer Draufsicht eine erste Ausführungsform der Erfindung. Die dargestellte elektrische Getriebeeinheit der Antriebsanordnung umfaßt einen Generator 1 sowie einen Antriebsmotor 3. Generator 1 und Antriebsmotor 3 sind gemeinsam in einem Trägerrahmen 5 angeordnet. Die Getriebeeinheit kann radnah im Fahrzeugchassis eingebaut werden. Generator 1 ist über Welle 7 mit dem nicht dargestellten Verbrennungsmotor der Antriebsanordnung gekoppelt. Antriebsmotor 3, der vorzugsweise eine sogenannte Transversalflußmaschine ist, wie beispielsweise in "Ein elektrischer Einzelradantrieb für City-Busse der Zukunft", B. Wüst, R. Müller, A. Lange, in "Der Nahverkehr, 6/94, Alba Fachverlag, Düsseldorf, S. 1-7" oder DE 37 05 089 beschrieben, deren Offenbarungsgehalt voll umfänglich in diese Anmeldung mit einbezogen wird, ist über Abtriebswelle 9 mit den in der Nähe angeordneten, nicht dargestellten, Antriebsrädern verbunden. Abtriebswelle 9 kann direkt auf die Antriebsräder wirken oder aber über ein Achsgetriebe auf beispielsweise die Hinterräder. Es wäre aber auch möglich, daß Abtriebswelle 9 auf ein in der Radnabe angeordnetes Planetengetriebe wirkt, wie beispielsweise in der DE 195 27 951 offenbart, deren Offenbarungsgehalt voll umfänglich in die vorliegende Anmeldung mit einbezogen wird.

Neben einer Speisung des Antriebsmotors 3 durch im Generator 1 erzeugten Strom kann auch vorgesehen sein, den Antriebsmotor aus einem Energiespeicher, beispielsweise einer Batterie, zu speisen. Eine derartige Versorgung der Antriebsmotoren ist beispielsweise aus der Schrift "Drive systems with permanent magnet synchronous motors, Automotive Engineering, Februar 1995, S. 75-79" bekanntgeworden, deren Offenbarungsgehalt voll umfänglich in die vorliegende Anmeldung mit einbezogen wird. Der außerhalb der von einem Trägerrahmen 5 umgebenen elektrischen Getriebeeinheit angeordnete Energiespeicher ist in Figur 1 nicht näher dargestellt. Am Trägerrahmen 5 können Befestigungsmittel, beispielsweise Befestigungspunkte 11, vorgesehen sein. Besonders vorteilhaft ist es, wenn diese Befestigungspunkte mit den Befestigungspunkten eines herkömmlichen Automatikgetriebes im Fahrzeugchassis übereinstimmen. Es ist dann besonders leicht, die im Trägerrahmen 5 zusammengefaßte elektrische Getriebeeinheit gegen ein Automatikgetriebe auszutauschen. Die für ein Automatikgetriebe bereits verwendete Antriebswelle 7 sowie Abtriebswelle 9 muß dann lediglich statt mit dem Automatikgetriebe mit der elektrischen Getriebeeinheit verbunden werden.

In einer Fortbildung der Erfindung kann vorgesehen sein, daß in Trägerrahmen 5 auch noch die elektrischen bzw. elektronischen Bauteile, wie beispielsweise Wechselrichter etc. untergebracht sind. Diese können, wie in vorliegendem Ausführungsbeispiel im strichpunktiert angedeuteten Raum 13 zwischen Generator 1 und Antriebsmotor 3 angeordnet sein.

Figur 2 zeigt die Ausführungsform einer elektrischen Getriebeeinheit gemäß Figur 1 in einer Seitenansicht. Besonders gut zu erkennen ist der Trägerrahmen 5, der sowohl Generator 1 wie auch Fahrmotor 3 aufnimmt. Gut zu erkennen auch die Antriebswelle 7, die Verbrennungsmotor und Generator miteinander verbindet sowie die Abtriebswelle 9, die vom Fahrmotor auf die Antriebsräder wirkt. Trägerrahmen 5 ist in vorliegendem Ausführungsbeispiel nach oben offen trogförmig ausgestaltet. Selbstverständlich sind für den Fachmann auch andere Ausführungsformen als die dargestellte eines nach oben offene Tragrahmens 5, denkbar. Beispielsweise könnte der Tragrahmen auch ganz geschlossen oder segmentweise aus einem Gerippe zusammengesetzt sein.

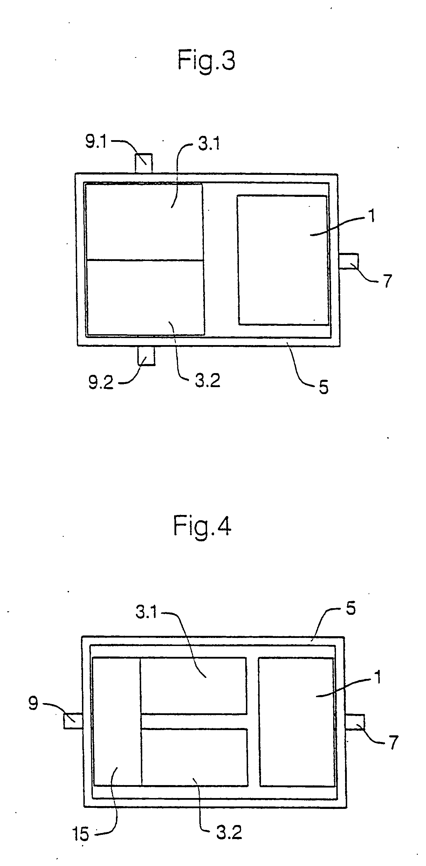

In Figur 3 ist eine weitere Ausführungsform einer elektrischen Getriebeeinheit mit Trägerrahmen in der Draufsicht dargestellt. Diese zweite Ausführungsform der Erfindung zeichnet sich dadurch aus, daß die elektrische Getriebeeinheit einen Generator 1 und zwei Fahrmotoren 3.1, 3.2 umfaßt. Jeder der Fahrmotoren 3.1, 3.2 wirkt auf eine Abtriebswelle 9.1, 9.2, die wiederum die Räder antreibt. Die Abtriebswelle ist wie in Figur 1 mit 7 bezeichnet, im übrigen gelten für gleiche Bauteile gleiche Bezugsziffern wie in den Figuren 1 und 2.

Die in Figur 4 dargestellte Ausführungsform umfaßt mehrere Antriebsmotoren. Wiederum sind Generator 1 sowie die Antriebsmotoren 3.1 und 3.2 in einem gemeinsamen Trägerrahmen 5 angeordnet. Generator 1 wird durch Antriebswelle 7 vom Verbrennungsmotor angetrieben. Der elektrische Strom wird zu den Fahrmotoren bzw. Antriebsmotoren 3.1 und 3.2 geführt. Die Antriebsmotoren 3.1 und 3.2 wirken zusammen auf das ebenfalls im Trägerrahmen angeordnete Summiergetriebe 15. Die beiden Antriebsmotoren 3.1 und 3.2 arbeiten somit über Summiergetriebe 15 auf die gemeinsame Abtriebswelle 9, die wiederum mit den Antriebsrädern verbunden ist.

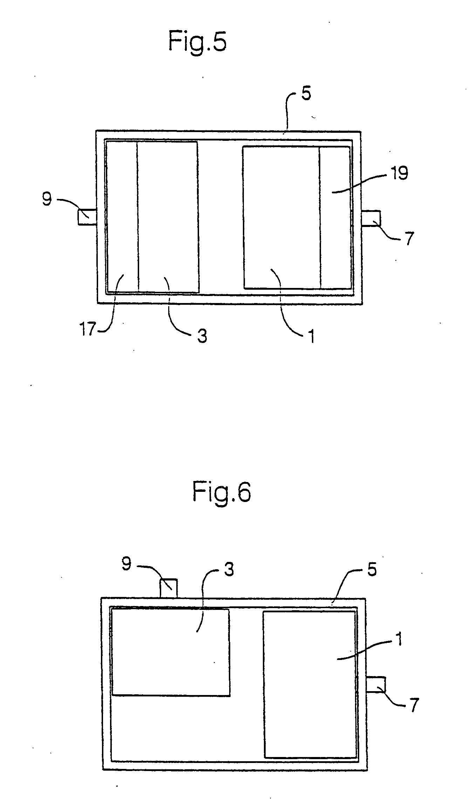

In den Figuren 5 und 6 sind weitere Varianten der Erfindung mit nur einem Antriebsmotor 3 pro erfindungsgemäßer Getriebeeinheit dargestellt. Gemäß Figur 5 ist innerhalb des Trägerrahmens 5 ein Generator 1 sowie Antriebsmotor 3 angeordnet. Dem Antriebsmotor 3 ist Getriebe 17, das auf Antriebswelle 9 wirkt, nachgeordnet. Getriebe 17 ist wie Generator 1 und Antriebsmotor 3 innerhalb des Rahmens 5 untergebracht. Anstelle des Getriebes 17 kann auch ein Drehmomentwandler vorgesehen sein. Dem Generator 1 vorangestellt ist ein weiteres Getriebe 19. Dieses Getriebe 19 kann der Drehzahlanpassung zwischen Getriebe und Antriebsmotor dienen.

Figur 6 zeigt eine Anordnung der Erfindung, bei der aufgrund der Einbauverhältnisse eine um einen beliebigen Winkel versetzte Anordnung zwischen Generator 1 und Antriebsmotor 3 gewählt wurde. Bei der dargestellten Ausführungsform beträgt dieser Winkel 90°. Selbstverständlich ist jedwede andere Anordnung denkbar, je nach dem, welche Einbauverhältnisse vorliegen. Insbesondere eignet sich die 90°-Anordnung für Fahrzeuge mit quer eingebautem Verbrennungsmotor, die bei konventionellem Getriebe einen Winkeltrieb zwischen Getriebe und Achse benötigen würde. Selbstverständlich ist es auch möglich, daß an- bzw. abtriebsseitige Getriebe gegenüber dem Generator bzw. dem Antriebsmotor um eine ebenso beliebigen Winkel zu versetzen. Beim Einbau in ein Fahrzeug könnten zwei derartige Getriebeeinheiten nebeneinander angeordnet sein, wobei jede einzelne erfindungsgemäße Getriebeeinheit in einem eigenen Trägerrahmen angeordnet ist.

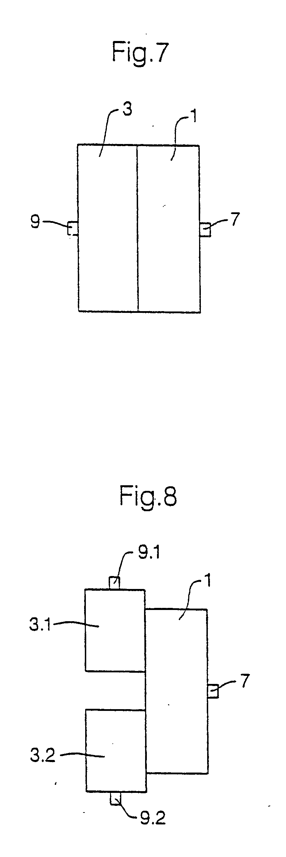

Die Figuren 7 bis 11 zeigen, wie schon die Ausführungsformen gemäß den Figuren 1 bis 6, eine Vielzahl von unterschiedlichen Anordnungen der einzelnen Komponenten der Getriebeeinheit bei einer selbsttragenden Konstruktion. Gleiche Komponenten wie in den Figuren 1 bis 6 werden auch in den Figuren 7 bis 11 mit denselben Bezugszeichen belegt.

Figur 7 zeigt eine erste Ausführungsform der selbsttragenden Konstruktion. Die dargestellte elektrische Getriebeeinheit der Antriebsanordnung umfaßt einen Generator 1 sowie einen Antriebsmotor 3. Generator 1 und Antriebsmotor 3 sind selbsttragend miteinander verbunden. Die Getriebeeinheit kann radnah im Fahrzeugchassis eingebaut werden. Generator 1 ist über Welle 7 mit dem nicht dargestellten Verbrennungsmotor der Antriebsanordnung gekoppelt. Antriebsmotor 3, der vorzugsweise eine sogenannte Transversalflußmaschine ist, ist über Abtriebswelle 9 mit den in der Nähe angeordneten, nicht dargestellten, Antriebsrädern verbunden. Abtriebswelle 9 kann direkt auf die Antriebsräder wirken oder aber über ein Achsgetriebe auf beispielsweise die Hinterräder. Es wäre aber auch möglich, daß Abtriebswelle 9 auf ein in der Radnabe angeordnetes Planetengetriebe wirkt.

Neben einer Speisung des Antriebsmotors 3 durch im Generator 1 erzeugten Strom kann auch vorgesehen sein, den Antriebsmotor aus einem Energiespeicher, beispielsweise einer Batterie, zu versorgen. Der Energiespeicher ist in Figur 7 nicht näher dargestellt. Die selbsttragende Konstruktion kann Befestigungsmittel umfassen. Besonders vorteilhaft ist es, wenn diese Befestigungspunkte der Befestigungsmittel wie schon bei der Konstruktion mit Trägerrahmen derart angeordnet sind, daß sie mit den Befestigungspunkten eines herkömmlichen Automatikgetriebes im Fahrzeugchassis übereinstimmen. Es ist dann besonders leicht, die elektrische Getriebeeinheit gegen ein Automatikgetriebe auszutauschen. Die für ein Automatikgetriebe bereits verwendete Antriebswelle 7 sowie Abtriebswelle 9 muß dann lediglich statt mit dem Automatikgetriebe mit der elektrischen Getriebeeinheit verbunden werden.

In einer Fortbildung der Erfindung kann vorgesehen sein, daß in die elektrischen bzw. elektronischen Bauteile, wie beispielsweise Wechselrichter etc., in der Nähe der Befestigungspunkte angeordnet sind.

Figur 8 zeigt eine zweite Ausführungsform einer selbsttragenden elektrischen Getriebeeinheit in der Draufsicht dargestellt. Diese Ausführungsform zeichnet sich dadurch aus, daß die elektrische Getriebeeinheit einen Generator 1 und zwei Fahrmotoren 3.1, 3.2 umfaßt. Jeder der Fahrmotoren 3.1, 3.2 wirkt auf eine Abtriebswelle 9.1, 9.2, die wiederum die Räder antriebt. Die Abtriebswelle ist wie in Figur 7 mit 7 bezeichnet, im übrigen gelten für gleiche Bauteile gleiche Bezugsziffern wie in den Figuren 1 bis 7.

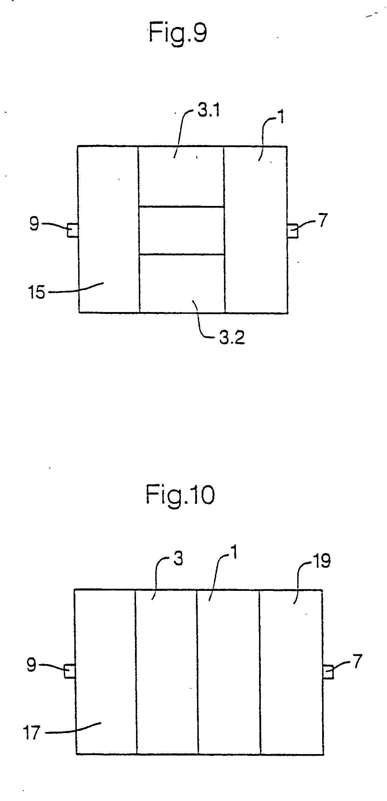

In Figur 9 ist eine weitere Ausführungsform einer selbsttragenden elektrischen Getriebeeinheit mit mehreren Antriebsmotoren gezeigt. Generator 1 wird durch Antriebswelle 7 vom Verbrennungsmotor angetrieben. Der elektrische Strom wird zu den Fahrmotoren bzw. Antriebsmotoren 3.1 und 3.2 geführt. Die Antriebsmotoren 3.1 und 3.2 wirken zusammen auf ein Summiergetriebe 15. Die beiden Antriebsmotoren 3.1 und 3.2 arbeiten somit über Summiergetriebe 15 auf die gemeinsame Abtriebswelle 9, die wiederum mit den Antriebsrädern verbunden ist.

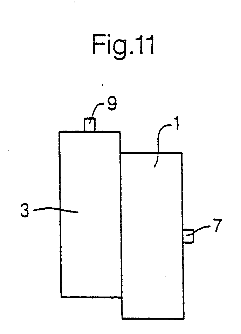

In den Figuren 10 und 11 sind weitere Varianten der selbsttragenden Ausführungsform mit nur einem Antriebsmotor 3 pro erfindungsgemäßer Getriebeeinheit dargestellt. Gemäß Figur 10 umfaßt die selbsttragende Ausführungsform einen Generator 1 sowie Antriebsmotor 3. Dem Antriebsmotor 3 ist Getriebe 17, das auf Antriebswelle 9 wirkt, nachgeordnet. Anstelle des Getriebes 17 kann auch ein Drehmomentwandler vorgesehen sein. Dem Generator 1 vorangestellt ist ein weiteres Getriebe 19. Dieses Getriebe 19 kann der Drehzahlanpassung zwischen Getriebe und Antriebsmotor dienen.

Figur 11 zeigt eine Anordnung der Erfindung, bei der aufgrund der Einbauverhältnisse eine um einen beliebigen Winkel versetzte Anordnung zwischen Generator 1 und Antriebsmotor 3 gewählt wurde. Bei der dargestellten Ausführungsform beträgt dieser Winkel 90°. Selbstverständlich ist jedwede andere Anordnung denkbar, je nach dem, welche Einbauverhältnisse vorliegen. Insbesondere eignet sich die 90°-Anordnung für Fahrzeuge mit quer eingebautem Verbrennungsmotor, die bei konventionellem Getriebe einen Winkeltrieb zwischen Getriebe und Achse benötigen würde. Selbstverständlich ist es auch möglich, daß an- bzw. abtriebsseitige Getriebe gegenüber dem Generator bzw. dem Antriebsmotor um eine ebenso beliebigen Winkel zu versetzen. Beim Einbau in ein Fahrzeug könnten zwei derartige Getriebeeinheiten nebeneinander angeordnet sein, wobei jede einzelne erfindungsgemäße Getriebeeinheit in einem eigenen Trägerrahmen angeordnet ist.

Mit vorliegender Erfindung wird somit erstmals eine elektrische Getriebeeinheit vorgestellt, die auf leichte Art und Weise den Austausch mit einem konventionellen Automatikgetriebe erlaubt. Als weitere Vorteile der elektrischen Getriebeeinheit ist die Möglichkeit der Vormontage zu erwähnen. Aufgrund der Vormontage vereinfacht sich der logische Aufwand für den Anwender, beispielsweise den Nutzfahrzeugbauer, erheblich. In einer noch vorteilhafteren Ausführungsform kann vorgesehen sein, daß die Kühlwasserleitungen ebenfalls vormontiert werden, so daß sich der Aufwand hierfür gegenüber herkömmlichen Anordnungen erheblich vereinfacht.

## Patentansprüche

1. Elektrische Getriebeeinheit, umfassend mindestens einen Antriebsmotor (3) und mindestens einen Generator (1), **dadurch gekennzeichnet, daß** die elektrische Getriebeeinheit austauschbar im Chassis eines Kraftfahrzeuges angeordnet ist.

2. Antriebsordnung für ein Fahrzeug mit
2.1 mindestens einem Verbrennungsmotor;
2.2 mindestens einem Generator (1)
2.3 mindestens einem Antriebsmotor (3),
**dadurch gekennzeichnet, daß**
2.4 mindestens ein Generator und mindestens ein Antriebsmotor mindestens zu einer austauschbaren elektrischen Getriebeeinheit zusammengefaßt sind, wobei die Getriebeeinheit räumlich in der Nähe der anzutreibenden Achse und/oder Räder angeordnet ist.

3. Antriebsordnung nach einem der Ansprüche 1 bis 2, **dadurch gekennzeichnet, daß** die elektrische Getriebeeinheit äußere Abmessungen aufweist, die denen eines Automatikgetriebes bezüglich der Einbaumaße entspricht.

4. Antriebsordnung nach einem der Ansprüche 2 bis 3, **dadurch gekennzeichnet, daß** die Getriebeeinheit Befestigungspunkte aufweist.

5. Antriebsordnung nach Anspruch 4, **dadurch gekennzeichnet, daß** die Befestigungspunkte derart an der Getriebeeinheit angeordnet sind, daß die für ein Getriebe vorgesehenen Befestigungsstellen in einem Fahrzeuggestell für die elektrische Getriebeeinheit verwendet werden können.

6. Antriebsordnung nach einem der Ansprüche 2 bis 5, **dadurch gekennzeichnet, daß** die elektrischen bzw. elektronischen Komponenten für die Getriebeeinheit von der Getriebeeinheit umfaßt werden.

7. Antriebsanordnung nach Anspruch 6, **dadurch gekennzeichnet, daß** die elektrischen bzw. elektronischen Komponenten für die Getriebeeinheit an den Befestigungspunkten angeordnet sind.

8. Antriebsordnung nach einem der Ansprüche 2 bis 7, **dadurch gekennzeichnet, daß** die Getriebeeinheit ein dem Generator (1) vorgeschaltetes Getriebe zur Drehzahlanpassung von Generator (1) und Verbrennungsmotor umfaßt.

9. Antriebsordnung nach einem der Ansprüche 2 bis 8, **dadurch gekennzeichnet, daß** die Getriebeeinheit mehrere Antriebsmotoren umfaßt.

10. Antriebsordnung nach Anspruch 9, **dadurch gekennzeichnet, daß** mehrere Antriebsmotoren über ein Summiergetriebe auf eine gemeinsame Abtriebswelle arbeiten.

11. Antriebsordnung gemäß Anspruch 9, **dadurch gekennzeichnet, daß** die elektrische Getriebeeinheit zwei Antriebsmotoren (3.1, 3.2) umfaßt, die derart angeordnet sind, daß über die Abtriebswellen (9.1., 9.2) die Räder/Achsen angetrieben werden können.

12. Antriebsordnung nach einem der Ansprüche 2 bis 8, **dadurch gekennzeichnet, daß** die Getriebeeinheit einen Antriebsmotor (3) umfaßt.

13. Antriebsordnung nach Anspruch 12, **dadurch gekennzeichnet, daß** dem einen Antriebsmotor ein Getriebe (15) nachgeschaltet ist.

14. Antriebsordnung nach einem der Ansprüche 2 bis 12, **dadurch gekennzeichnet, daß** der oder die Antriebsmotor(en) und/oder das abtriebsseitige Getriebe gegenüber dem Generator um einen Winkel versetzt angeordnet ist.

15. Antriebsanordnung nach einem der Ansprüche 2 bis 14, **dadurch gekennzeichnet, daß** die Antriebsanordnung des weiteren einen Energiespeicher zur Versorgung der Antriebsmotoren umfaßt.

16. Antriebsanordnung nach einem der Ansprüche 2 bis 15, **dadurch gekennzeichnet, daß** die austauschbare Getriebeeinheit einen Trägerrahmen umfaßt.

17. Antriebsanordnung nach einem der Ansprüche 2 bis 15, **dadurch gekennzeichnet, daß** die austauschbare Getriebeeinheit selbsttragend ausgebildet ist.
